# FASCICULE DE BREVET EUROPEEN

(11) **EP 1 443 779 B1**
(45) Date de publication et mention de la délivrance du brevet: **03.05.2006**
(21) Numéro de dépôt: 04290226.2
(22) Date de dépôt: 28.01.2004
(51) Int. Cl.: H04Q 7/20, H04Q 7/38

(54) **Procédé pour la gestion de la qualité de service dans un système de radiocommunications mobiles**
Verfharen zur Verwaltung der Dienstqualität (QOS) in einem Mobilfunkkommunikationssystem
Method for managing the quality of service (QOS) in a radiocommunication mobile system

(30) Priorité: 31.01.2003 FR 0301103
(43) Date de publication de la demande: 04.08.2004
(73) Titulaire: Evolium S.A.S., 75008 Paris (FR)
(72) Inventeur: Drevon, Nicolas, 75016 Paris (FR); Gabriel, Anne, 75014 Paris (FR); Treillard, Pascal, 91120 Palaiseau (FR)
(74) Mandataire: El Manouni, Josiane

(56) Documents cités:
- WO-A-01/86974
- US-A1- 2002 093 925
- 3GPP: "Universal Mobile Telecommunication System (UMTS) Quality of Service (QoS) concept and architecture(3GPP TS 23.107 version 5.7.0 Release 5)" ETSI TS 123 107 V5.7.0, XX, XX, décembre 2002 (2002-12), XP002251214

## Description

La présente invention concerne d'une manière générale les systèmes de radiocommunications mobiles.

La présente invention est notamment applicable aux systèmes de radiocomunications mobiles de troisième génération, notamment de type UMTS (« Universol Mobile Telecommunication System »).

D'une manière générale, les systèmes de radiocommunications mobiles font l'objet de normalisation, et pour plus d'informations on pourra se référer aux normes correspondantes, publiées par les organismes de normalisation correspondants.

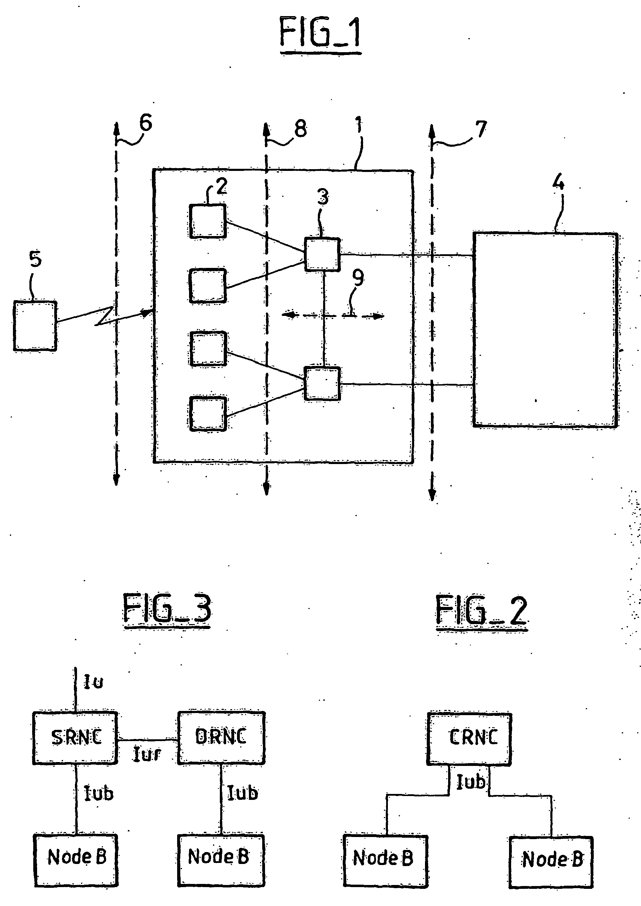

L'architecture générale de ces systèmes est rappelée sur la figure 1, elle comporte essentiellement :
- un réseau d'accès radio 1, ou RAN (pour « Radio Access Network »),
- un réseau coeur 4, ou CN (pour « Core Network »).

Le RAN comporte des éléments de réseau tels que des stations de base 2 et de contrôleurs de stations de base 3. Le RAN est en relation d'une part avec des terminaux mobiles 5, via une interface 6, et d'autre part avec le CN 4 via une interface 7. Le CN 4 est en relation avec des réseaux extérieurs (non illustrés spécifiquement). A l'intérieur du RAN, les stations de base communiquent avec les contrôleurs de stations de base via une interface 8.

Dans les systèmes de type UMTS, le RAN est appelé UTRAN ("UMTS Terrestrial Radio Access Network »), les stations de base sont appelées « Node B », les contrôleurs de stations de base sont appelés RNC ("Radio Network Controller"), et les terminaux mobiles sont appelés UE (« User Equipment »). L'interface 6 est appelée « interface Uu », l'interface 7 est appelée « interface lu », l'interface 8 est appelée « interface lub », et une interface 9 entre RNCs, appelée « interface lur », est en outre introduite. L'interface 6 est aussi appelée interface radio, et les interfaces 7, 8, 9 sont aussi appelées interfaces terrestres.

Pour un Node B donné, le RNC qui le contrôle est aussi appelé CRNC (pour «Controlling Radio Network Controller »). Le CRNC a un rôle de contrôle de charge et d'allocation de ressources radio pour les Node B qu'il contrôle. La figure 2 illustre ainsi un CRNC contrôlant un ensemble de Node B et les cellules (non illustrées spécifiquement) couvertes par ces Node B.

Pour une communication donnée relative à un UE donné, il existe un RNC, appelé SRNC (pour « Serving Radio Network Controller ») ayant un rôle de contrôle pour la communication considérée. Un Node B connecté à l'UE mais non contrôlé par le SRNC communique avec le SRNC via le RNC qui le contrôle, appelé aussi DRNC (pour « Drift RNC »), via l'interface lur. Cette situation est en particulier (mais non exclusivement) possible en cas de transmision en macro-diversité (ou « soft handover » en anglais). La figure 3 illustre ainsi d'une part un SRNC contrôlant un UE, ce SRNC étant en relation avec le CN via l'interface lu, et d'autre part un DRNC contrôlant l'UE pour des liens radio établis pour des cellules (non illustrées spécifiquement) contrôlées par ce DRNC.

D'une manière générale, de tels systèmes doivent pouvoir supporter des trafics dont les besoins en qualité de service (ou QoS, pour « Quality of Service ») peuvent être très différents les uns des autres. L'architecture de QoS dans un système tel que l'UMTS est définie notamment dans la spécification 3GPP TS 23.107 publiée par le 3GPP (« 3^{rd} Generation Partnership Project »). Cette architecture de QoS repose sur des services support caractérisés par des attributs de QoS. On distingue différents services support tels que notamment les services « support accès radio » ou RAB (« Radio Access Bearer »), les services « support radio » ou RB (« Radio Bearer »), et les services « support lu ». On distingue différents attributs de QoS tels que notamment: la classe de trafic (ou « traffic class »), le débit binaire maximal (ou « maximum bitrate »), le débit binaire garanti (ou « guoranteed bitrate »), le délai de transfert (ou « transfer delay»), la priorité de traitement de trafic (ou « traffic handling priority ») ...etc. On distingue en outre quatre classes de trafic, respectivement pour des applications de type conversationnel (ou « conversational »), à flux continu (ou « streaming »), interactif (ou « interactive »), ou d'arrière-plan (ou «background »). Les attributs de QoS autres que la classe de trafic peuvent en outre être différents pour différents types de services d'une même classe de trafic; par exemple, pour la classe de trafic «conversotionnelle», le délai de transfert pour un service de type téléphonie est inférieur au délai de transfert pour un service de type vidéo-téléphonie, qui est lui-même inférieur, par exemple au délai de transfert pour un service de type navigation sur le Web (ou « Web browsing ») pour la classe de trafic « interactive » par exemple. En général, le délai de transfert n'est spécifié que pour les classes de trafic conversationnelle ou à flux continu, et la priorité de traitement de trafic n'est spécifiée que pour la classe interactive.

D'une manière générale, un modèle a été défini pour les protocoles de communication sur les interfaces terrestres, dans lequel on distingue une couche réseau radio (ou « Radio Network Loyer ») correspondant à des fonctionnalités liées à l'accès radio indépendamment de la technologie utilisée pour le transport sur les interfaces terrestres, et une couche réseau de transport (ou « Transport Network layer ») correspondant à des fonctionnalités liées au transport, fonction de la technologie utilisée pour le transport sur les interfaces terrestres. D'une manière générale, deux types de données peuvent être communiquées selon ces protocoles: des données correspondant à du trafic émis ou reçu par un UE (ou données usager, ou « user data ») et des données correspondant à de la signalisation, nécessaire au fonctionnement du système. On peut également distinguer deux types de signalisation: la signalisation liée à la couche réseau radio, et la signalisation liée à la couche réseau de transport.

La signalisation relative à la couche réseau radio correspond notamment aux protocoles suivants, appelés aussi protocoles d'application:
- pour l'interface lu, le protocole RANAP (« Radio Network Application Part »), défini notamment dans la spécification 3GPP TS 25.413 publiée par le 3GPP,
- pour l'interface tub, le protocole NBAP (« Node B Application Part »), défini notamment dans la spécification 3GPP TS 25.433 publiée par le 3GPP,
- pour l'interface lur, le protocole RNSAP (« Radio Network Subsystem Application Part »), défini notamment dans la spécification 3GPP TS 25.423 publiée par le 3GPP.

Le protocole RANAP inclut notamment la signalisation relative à l'établissement de support d'accès radio (ou RAB, pour «Radio Access Bearer»). Le protocole NBAP inclut notamment la signalisation relative à l'établissement de lien radio pour des cellules contrôlées par le SRNC. Le protocole RNSAP inclut notamment la signalisation relative à l'établissement de lien radio pour des cellules contrôlées par le DRNC.

D'une manière générale, la gestion de la QoS dans un tel système comporte d'une part une gestion de QoS liée à l'accès radio indépendamment de la technologie utilisée pour le transport sur les interfaces terrestres, et d'autre part une gestion de QoS liée au transport, fonction de la technologie utilisée pour le transport sur les interfaces terrestres.

La gestion de QoS liée à l'accès radio est typique des systèmes de type CDMA (« Code Division Multiple Access »), tels que notamment l'UMTS, et inclut des mécanismes tels que : contrôle d'admission radio, sélection de formats de transport appropriés sur des canaux de transport, ...etc. D'une manière générale, les échanges de signalisation définis dans les protocoles d'application rappelés ci-dessus permettent aux éléments de réseau concernés de l'UTRAN de connaître les contraintes de QoS nécessaires à la mise en oeuvre de tels mécanismes de gestion de QoS liés à l'accès radio. Le principal élément de réseau de l'UTRAN concerné par la mise en oeuvre de mécanismes de gestion de QoS liés à l'accès radio est le RNC, dons son rôle de SRNC. En effet, à partir de paramètres de QoS qui lui sont signalés par le CN (selon le protocole RANAP), le SRNC peut décider quel type de service est requis pour un UE, et donc traduire ces paramètres de QoS en paramètres utilisables pour l'établissement de liens radio entre Node B et UE, si nécessaire via un ou plusieurs DRNC, puis signaler ces paramètres aux éléments de réseau concernés : Node B (selon le protocole NBAP), DRNC (selon le protocole RNSAP).

D'une manière générale, le transport sur les interfaces terrestres utilise le mode paquet afin d'optimiser l'utilisation des ressources de transmission disponibles sur ces interfaces. D'une manière générale, le mode poquet a plutôt été conçu initialement pour des services non temps-réel (n'ayant pas de contraintes de délai et/ou de priorité strictes) et des mécanismes additionnels, incluant notamment des mécanismes de gestion de QoS, ont ensuite été introduits pour permettre au mode paquet de supporter également des services temps-réel (ayant des contraintes de délai et/ou de priorité strictes), tels que notamment des services de voix. Dans le cas notamment de l'UMTS, l'introduction de notion de temps réel pour les services paquet est aussi nécessaire pour le problème du « soft handover » qui impose au RNC de fournir les instants d'émission des données aux différents Node B contrôlant les cellules avec lesquelles le mobile est connecté. Ces instants d'émission sont donnés sous forme de numéros de trames radio, et bornent donc le délai maximal autorisé pour la transmission des données entre le RNC et le Node B. Ce délai maximal ne peut pas être mis à une valeur trop élevée notamment pour des raisons d'efficacité de contrôle de puissance et de contrôle d'admission radio.

Une des technologies de transport utilisées dans l'UTRAN est la technologie ATM («Asynchronous Transfer Mode») basée sur un multiplexage temporel asynchrone de petits paquets de taille fixe appelés cellules. D'une manière générale, la technologie ATM fait l'objet de normalisation, et pour plus d'informations on pourra se référer aux normes correspondantes, publiées par les organismes de normalisation correspondants. On rappelle simplement qu'un réseau ATM peut être modélisé au moyen d'une couche dite couche ATM et d'une couche dite couche d'adaptation à l'ATM (ou couche AAL, pour « ATM Adaptation Loyer ») placée entre la couche ATM et les utilisateurs. La couche ATM est orientée connexion, et réalise une transmission de cellules sur une connexion logique entre une source et une destination, cette connexion logique étant aussi appelée circuit virtuel ou VC (pour « Virtual Channel »). Pour l'application de l'ATM au transport à l'intérieur de l'UTRAN, une couche AAL spécifique, appelée couche AAL2, est utilisée pour les données usager. Lorsqu'un UE communique avec l'UTRAN, une connexion logique correspondante, ou connexion AAL2, est établie sur une ou plusieurs des interfaces terrestres concernées de l'UTRAN. Dans le cas de l'ATM, les mécanismes permettant de gérer la QoS de transport incluent notamment un contrôle d'admission de connexion (pour décider si les ressources de transmission sont suffisantes pour accepter une nouvelle requête de connexion AAL2 tout en garantissant que la QoS requise est respectée) et une mise en file d'attente (ou « scheduling » en anglais) pour le multiplexage de connexions AAL2 à l'intérieur d'un circuit virtuel VC, par exemple en fonction de la priorité.

D'autres technologies que l'ATM peuvent être utilisées dans le réseau de transport, telles que notamment la technologie IP (« Internet Protocol»). D'une manière générale, la technologie IP fait également l'objet de normalisation, et pour plus d'informations on pourra également se référer aux normes correspondantes, publiées par les organismes de normalisation correspondants. De même, dons le cas de technologie IP, des mécanismes permettant de gérer la QoS de transport peuvent être prévus.

La présente invention s'intéresse plus particulièrement à la gestion de la QoS liée au transport, et plus particulièrement encore aux mécanismes permettant aux éléments de réseau concernés de l'UTRAN de connaître les contraintes de QoS nécessaires à la mise en oeuvre de cette gestion de QoS. En l'absence d'une telle connaissance, ou dons le cas de connaissance insuffisante, cette gestion de QoS ne peut être mise en oeuvre de manière optimale et il peut alors en résulter des dégradations de QoS inacceptables pour les usagers.

A partir de paramètres de RAB (« Radio Access Bearer ») qui lui sont signalés par le CN selon le protocole RANAP, le SRNC peut décider quel type de service est requis pour un UE, et donc quelle QoS devrait être utilisée dans le réseau de transport pour transmettre des données usager (ou « user data » en anglais) pour cet UE dans le sens descendant sur l'interface lub vers le Node B (respectivement sur l'interface lur vers le DRNC).

Un problème est cependant, pour le Node B (respectivement DRNC) de savoir quelle QoS devrait être utilisée dans le réseau de transport pour transmettre des données usager pour un UE dans le sens montant sur l'interface lub (respectivement dans le sens montant sur l'interface lur et/ou descendant sur l'interface lub).

Une première solution pour résoudre ce problème est la suivante. Dans le cas de réseau de transport utilisant la technologie ATM, la signalisation relative à la couche réseau de transport inclut le protocole ALCAP («Access Link Control Application Part») tel que défini notamment dans les spécifications ITU-T Q.2360-1 et ITU-T Q.2360-2 publiées par l'ITU (« International Telecommunication Union »), et correspondant à des versions successives de la norme 3GPP, repsectivement la version R99 (pour la spécification ITU-T Q.2360-1) et les versions R4 puis R5 (pour la spécification ITU-T Q.2360-2). La spécification ITU-T Q.2360-2 définit un paramètre de QoS appelé « AAL type 2 requested type path » pouvant prendre une des trois valeurs suivantes, en fonction du type de service: « stringent », « tolerant », « stringent bi-level». Ce paramètre est transmis par le CRNC (respectivement SRNC) au Node B (respectivement DRNC) et permet au Node B (respectivement DRNC) de connaître, dans les limites ainsi définies par ces trois valeurs possibles, les contraintes de QoS applicables pour la transmission de données usager dons le sens montant sur l'interface lub (respectivement dans le sens montant et dans le sens descendant sur l'interface lur).

Cependant, cette première solution est seulement applicable à partir de la version R4 de la norme 3GPP. Elle n'est applicable ni dans le cas de la version R99, ni dans le cas de la version R5 si le réseau de transport utilise la technologie IP. Notamment, dans l'état actuel de la norme, dans le cas de réseau de transport utilisant la technologie IP, la signalisation relative à la couche réseau de transport est telle que le Node B (respectivement le DRNC) ne sait pas quelle QoS devrait être utilisée dans le réseau de transport pour transmettre des données usager dans le sens montant sur l'interface lub (respectivement dans les sens montant sur l'interface lur et/ou descendant sur l'interface lub). En outre, les trois valeurs possibles rappelées plus haut pour le paramètre « AAL type requested type path » ne permettent pas nécessairement une différentiation suffisante des différents types de services possibles, et ne permettent donc pas nécessairement de mettre en oeuvre les mécanismes de gestion de QoS de manière optimale.

Une deuxième solution pour résoudre ce problème est la suivante. Pour le cas de la version R99 de la norme, à défaut de solution normalisée, il serait possible d'utiliser un mécanisme « propriétaire » dans le Node B (respectivement DRNC) pour configurer la priorité de transport, pour chaque type de service, sur l'lub (respectivement lur). Par exemple, le Node B (respectivement DRNC) pourrait reconnaître, à partir de paramètres transmis par le CRNC (respectivement SRNC) selon le protocole ALCAP, quelles connexions sont associées à des services de voix, et leur attribuer une QoS de transport élevée, et inversement attribuer une QoS de transport plus faible à des connexions associées à d'autres types de services (par exemple navigation sur le Web (ou «Web browsing »), ftp, signalisation dédiée, vidéo-téléphonie, ...etc.).

Cependant cette deuxième solution n'est applicable que dans le cas où le Node 8 (respectivement le DRNC) et le CRNC (respectivement le SRNC) proviennent d'un même constructeur. Elle n'est pas applicable au cos où ces éléments de réseau proviennent de constructeurs différents.

La présente invention utilise une autre approche pour résoudre ce problème. La présente invention est notamment basée sur les observations suivantes. Certains paramètres de QoS, tels que des paramètres représentatifs de délai de transfert (ou « transfer delay») et/ou de priorité de traitement de trafic (ou « traffic handling priority »), tels que définis notamment dans la spécification 3GPP TS 23.107 rappelée précédemment, sont de très haute importance pour garantir la QoS, notamment la QoS de transport, à l'intérieur d'un tel réseau. Or de tels paramètres sont déjà utilisés pour la gestion de QoS liée à l'accès radio. Cependant, dans l'état actuel de la norme, et comme rappelé précédemment, pour la gestion de la QoS liée à l'accès radio, la connaissance de tels paramètres de QoS reste essentiellement localisée au niveau du SRNC. En effet, comme rappelé précédemment, à partir de paramètres de RAB (« Radio Access Bearer ») qui lui sont signalés par le CN (selon le protocole RANAP), le SRNC peut décider quel type de service est requis pour un UE. Le SRNC peut alors traduire ces paramètres en paramètres utilisables pour l'établissement de liens radio entre Node B et UE, si nécessaire via un ou plusieurs DRNC, puis signaler ces paramètres aux éléments de réseau concernés : Node B (selon le protocole NBAP), DRNC (selon le protocole RNSAP). De tels paramètres incluent notamment, pour l'établissement de lien radio entre Node B et UE, des paramètres tels que notamment des paramètres de format de transport ou TFCS (pour « Transport Format Combination Set »), et si nécessaire pour un multiplexage par le DRNC sur des canaux de transport communs ou partagés, des paramètres tels que la classe de trafic (ou « traffic class ») et la priorité de traitement de trafic (ou « traffic handling priority »).

Cependant, dans l'état actuel de la norme, une telle signalisation de paramètres de format de transport ne permet pas en général d'indiquer les contraintes de QoS pour la couche réseau de transport, et une telle signalisation de la classe de trafic et de la priorité de traitement de trafic est effectuée seulement sur l'interface lur (et non sur l'interface lub) et seulement dans le cas de canaux de transport communs ou partagés (et non dans le cas de canaux dédiés). En outre, une telle signalisation ne permet pas d'indiquer les contraintes de QoS pour la couche réseau de transport, au moins en termes de délai de transfert. Notamment, elle ne permet pas de faire une distinction, parmi différents services de classe « conversationnelle », entre des services (tels que notamment des services de téléphonie) qui requièrent un faible délai de transfert et des services (tels que par exemple des services de vidéo-téléphonie) qui peuvent tolérer des délais de transfert plus importants.

WO 01 86974 dévoile un procédé pour la gestion de la qualité de service (QoS) dans un réseau mobile. Des messages qui définissent la QoS sont échangés parmi les usagers sous le contrôle d'un contrôleur.

La présente invention a notamment pour but de résoudre tout ou partie des problèmes, et /ou éviter tout ou partie des différents inconvénients, mentionnés précédemment. La présente invention a également pour but de proposer différents mécanismes permettant aux éléments de réseau concernés de l'UTRAN de connaître les contraintes de QoS de transport nécessaires à la mise en oeuvre de la gestion de cette QoS. Plus généralement, la présente invention a pour but d'améliorer et/ou simplifier la gestion de la qualité de service dans ces systèmes.

Un des objets de la présente invention est un procédé pour la gestion de la qualité de service dans un réseau de radiocommunications mobiles dons lequel les protocoles de communication sur les interfaces terrestres comportent une couche réseau radio et une couche réseau de transport, et dans lequel la gestion de la qualité de service comporte une gestion de qualité de service liée à la couche réseau radio et une gestion de qualité de service liée à la couche réseau de transport, ledit procédé comportant:
- une étape selon laquelle un élément de réseau dit premier élément de réseau signale à un autre élément de réseau dit deuxième élément de réseau, au moyen de protocole de signalisation de la couche réseau radio, au moins un paramètre représentatif de QoS de transport, ou qualité de service pour la couche réseau de transport,
- une étape selon laquelle le deuxième élément de réseau utilise ledit au moins un paramètre, pour la gestion de QoS de transport.

Suivant une autre caractéristique, ledit premier élément de réseau est un CRNC (« Controlling Radio Network Controller »).

Suivant une autre caractéristique, ledit deuxième élément de réseau est un Node B, ou station de base.

Suivant une autre caractéristique, ledit protocole de signalisation de la couche réseau radio est un protocole de signalisation (NBAP) applicable à l'interface (lub) entre CRNC et Node B.

Suivant une autre caractéristique, ledit deuxième élément de réseau utilise ledit au moins un paramètre pour la gestion de QoS de transport, pour la transmission dons le sens montant sur l'interface (lub) entre CRNC et Node B.

Suivant une autre caractéristique, ledit premier élément de réseau est un SRNC (« Serving Radio Network Controller »).

Suivant une autre caractéristique, ledit deuxième élément de réseau est un DRNC (« Drift Radio Network Controller »).

Suivant une autre caractéristique, ledit protocole de signalisation de la couche réseau radio est un protocole de signalisation (RNSAP) applicable à l'interface (lur) entre SRNC et DRNC.

Suivant une autre caractéristique, ledit deuxième élément de réseau utilise ledit ou moins un paramètre pour la gestion de QoS de transport, pour la transmission dans le sens montant, sur l'interface (lur) entre SRNC et DRNC, et/ou dans le sens descendant, sur l'interface (lub) entre DRNC et Node B.

Suivant une autre caractéristique, ledit au moins un paramètre représentatif de QoS de transport correspond à un paramètre spécifique destiné à indiquer un niveau de QoS de transport.

Suivant une autre caractéristique, ledit ou moins un paramètre représentatif de QoS de transport correspond à au moins un paramètre de RAB (« Radio Access Beorer ») pouvant également être utilisé comme paramètre de QoS de transport.

Suivant une autre caractéristique, ledit au moins un paramètre de RAB (« Radio Access Bearer ») pouvant également être utilisé comme paramètre de QoS de transport correspond au délai de transfert.

Suivant une autre caractéristique, ledit au moins un paramètre de RAB («Radio Access Bearer ») pouvant également être utilisé comme paramètre de QoS de transport correspond à la priorité de traitement de trafic.

Suivant une autre caractéristique, ledit au moins un paramètre de RAB (« Radio Access Bearer ») pouvant également être utilisé comme paramètre de QoS de transport correspond à la classe de trafic.

Suivant une autre caractéristique, ledit au moins un paramètre correspondant à au moins un paramètre de RAB (« Radio Access Bearer ») pouvant également être utilisé comme paramètre de QoS de transport est recopié ou traduit du protocole RANAP vers le protocole NBAP, respectivement du protocole RANAP vers le protocole RNSAP.

Suivant une outre caractéristique, ledit ou moins un paramètre représentatif de QoS de transport correspond à au moins un paramètre pouvant être associé à un niveau de QoS de transport ou à au moins un paramètre de RAB (« Radio Access Bearer ») pouvant également être utilisé comme paramètre de QoS de transport.

Suivant une autre caractéristique, ledit au moins un paramètre pouvant être associé à un niveau de QoS de transport ou à au moins un paramètre de RAB («Radio Access Bearer») pouvant également être utilisé comme paramètre de QoS de transport correspond à un paramètre d'ajustement temporel, des valeurs les plus faibles de ce paramètre étant attribuées à des connexions ayant des contraintes de délai de transfert et/ou de priorité de traitement de trafic les plus élevées, et des valeurs les plus élevées de ce paramètre étant attribuées à des connexions ayant des contraintes de délai de transfert et/ou de priorité de traitement de trafic les plus faibles.

Suivant une autre caractéristique, ledit paramètre d'ajustement temporel est le paramètre TOAWS (« Time Of Arrival Window Start »).

Suivant une autre caractéristique, ledit au moins un paramètre pouvant être associé à un niveau de QoS de transport ou à au moins un paramètre de RAB (« Radio Access Bearer ») pouvant également être utilisé comme paramètre de QoS de transport correspond à un paramètre représentatif de nombre de canaux dédiés (ou DCH, pour « Dedicated CHannel ») alloués à une connexion, un nombre élévé de canaux dédiés étant alloué à des connexions ayant des contraintes de délai de transfert et/ou de priorité de traitement de trafic élevées, et un nombre moins élévé de canaux dédiés étant alloué à des connexions ayant des contraintes de délai de transfert et/ou de priorité de traitement de trafic moins élevées.

Un autre objet de la présente invention est un élément de réseau, comportant des moyens pour mettre en oeuvre un tel procédé.

Suivant une autre caractéristique, ledit élément de réseau correspond à un CRNC

Suivant une autre caractéristique, ledit élément de réseau correspond à un SRNC.

Suivant une autre caractéristique, ledit élément de réseau correspond à un DRNC.

Suivant une autre caractéristique, ledit élément de réseau correspond à un Node B.

D'autres objets et caractéristiques de la présente invention apparaîtront à la lecture de la description suivante d'un exemple de réalisation, faite en relation avec les dessins ci-annexés dans lesquels:
- la figure 1, décrite précédemment, rappelle l'architecture générale d'un système de radiocommunications mobiles, tel que notamment l'UMTS,
- les figures 2 et 3, décrites précédemment, rappellent les différents rôles possibles d'un RNC : CRNC, SRNC, DRNC

Différents modes de réalisation de la présente invention sont décrits dans ce qui suit.

Dans un premier mode de réalisation, un ou plusieurs nouveaux paramètres peuvent être introduits dans un ou plusieurs messages de signalisation transmis de CRNC vers Node B selon le protocole NBAP (respectivement de SRNC vers DRNC selon le protocole RNSAP). Au moyen de ce ou ces nouveaux paramètres, le CRNC (respectivement SRNC) peut attribuer un haut niveau de QoS de transport à certains types de services (notamment des types de services ayant des contraintes élevées de délai et/ou de priorité), et un niveau de QoS de transport plus faible à d'autres types de services (notamment des types de services ayant des contraintes de délai et/ou de priorité moins strictes). Notamment, un haut niveau de QoS de transport pourra être attribué à des services de voix et un niveau de QoS de transport plus faible pourra être attribué à d'autres types de services. Des niveaux de QoS intermédiaires peuvent également être prévus, en nombre suffisant pour permettre une différentiation suffisante des types de services, et donc une optimisation de gestion de la QoS. Notamment ce ou ces nouveaux paramètres pourront être transmis dons un message tel que le message « Radio Link Setup Request » transmis de CRNC vers Node B selon le protocole NBAP (respectivement de SRNC vers DRNC selon le protocole RNSAP).

Dans un deuxième mode de réalisation, un ou plusieurs nouveaux paramètres, destinés à indiquer des valeurs de paramètres de QoS de transport, par type de service, peuvent être introduits dans un ou plusieurs messages de signalisation transmis de CRNC vers Node B selon le protocole NBAP (respectivement de SRNC vers DRNC selon le protocole RNSAP). Notamment, ce ou ces nouveaux paramètres peuvent être dérivés des paramètres de RAB (« Radio access Bearer ») transmis au SRNC selon le protocole RANAP. On rappelle en effet que le protocole RANAP inclut la transmission de CN vers SRNC des paramètres de RAB suivants :
- la classe de trafic (ou « traffic class »),
- le délai de transfert (ou « transfer delay ») pour les services de classe « conversationnelle » ou à flux continu,
- la priorité de traitement (ou «traffic handling priority ») pour les services de classe «interactive ».

Notamment ce ou ces nouveaux paramètres pourront correspondre à un ou plusieurs des paramètres « traffic class », « transfer delay » et « traffic handling priority », qui pourront alors être recopiés (ou traduits) du protocole RANAP vers le protocole NBAP, ou à un ou plusieurs des paramètres « transfer delay » et « traffic handling priority », qui pourront alors être recopiés (ou traduits) du protocole RANAP vers le protocole RNSAP (le paramètre « traffic class » étant déjà recopié du protocole RANAP vers le protocole RNSAP).

Notamment ce ou ces nouveaux paramètres pourront être transmis dans un message tel que le message « Radio Link Setup Request » transmis de CRNC vers Node B selon le protocole NBAP (respectivement de SRNC vers DRNC selon le protocole RNSAP).

Dans un troisième mode de réalisation, un ou plusieurs paramètres existants communiqués au Node B (respectivement DRNC) selon le protocole NBAP (respectivement RNSAP) peuvent être utilisés par le Node B (respectivement DRNC) pour affecter un niveau élevé de QoS de transport à certains types de services (notamment des types de services ayant des contraintes strictes de délai et/ou de priorité) et un niveau plus faible de QoS de transport à d'autres types de services (notamment des types de services ayant des contraintes de délai et/ou de priorité moins strictes).

Un premier exemple possible de tels paramètres existants est le paramètre TOAWS (« Time Of Arrival Window Start ») défini notamment dans la spécification 3GPP TS 25.402. On rappelle que pour le transfert de données usager sur les interfaces terrestres, des protocoles spécifiques appelés « Frame Protocol » sont utilisés, tels que définis notamment dans les spécifications 3GPP TS 25.425, 3GPP TS 25.427, 3GPP TS 25.435. Ces protocoles prévoient une structuration de données selon un format de trames, et des fonctions d'ajustement temporel et de synchronisation, faisant notamment intervenir le paramètre TOAWS. Plus précisément, une fenêtre de réception est définie, dans laquelle devrait se trouver l'instant d'arrivée au Node B d'une trame transmise par le RNC. Cette fenêtre est définie par un instant de début de fenêtre (ou TOAWS, pour « Time Of Arrival Window Stort »), défini relativement à un instant de fin de fenêtre (ou TOAWE, pour « Time Of Arrival Window End »), défini lui-même relativement à un instant limite d'arrivée (ou LTOA, pour « Latest Time Of Arrival »). Si l'instant d'arrivée d'une trame se situe avant TOAWS, ou après TOAWE, alors un ajustement temporel est demandé par le Node B au RNC. Le but est d'assurer que le Node B reçoit des trames dans un temps approprié pour leur re-transmission à des instants prédéterminés sur l'interface radio, c'est-à-dire assez tôt pour pouvoir effectuer les traitements nécessaires avant une telle re-transmission, mais pas trop tôt pour éviter les temps d'attente. Une telle fenêtre de réception est configurée dans le Node B à chaque établissement de lien radio; des valeurs de TOAWE et TOAWS sont ainsi signalées par le SRNC (respectivement SRNC) au Node B (respectivement DRNC) dons différents messages prévus selon le protocole NBAP (respectivement RNSAP), tels que notamment le message « Radio Link Set-up Request », ...etc.

Suivant un des aspects de l'invention, le CRNC (respectivement SRNC) peut ainsi, notamment, attribuer des valeurs de TOAWS les plus faibles à des connexions ayant un niveau plus élevé de QoS de transport, et le Node B (respectivement DRNC) peut alors utiliser ces valeurs de TOAWS pour la gestion de la QoS de transport. En d'autres termes, un paramètre d'ajustement temporel tel que le paramètre TOAWS peut être considéré comme un paramètre représentatif de QoS de transport, dans la mesure où il peut être associé à un niveau de QoS de transport ou à au moins un paramètre de RAB pouvant être utilisé comme paramètre de QoS de transport. Le CRNC (respectivement SRNC) peut attribuer par exemple une valeur de TOAWS égale à 10 ms à des connexions ayant un niveau élevé de QoS de transport (telles que notamment des connexions pour des services de voix), ou une valeur de TOAWS plus élevée à des connexions ayant un niveau plus faible de QoS de transport, et signaler cette valeur au Node B (respectivement DRNC) notamment dans le message NBAP (respectivement RNSAP) « Radio Link Setup request». Le Node B (respectivement DRNC) attribue alors un haut niveau de QoS de transport à des connexions ayant des valeurs de TOAWS les plus faibles, ou un niveau de QoS de transport plus faible à des connexions ayant des voleurs de TOAWS plus élevées.

Un deuxième exemple possible de tels paramètres existants est le nombre de canaux dédiés (ou DCH, pour « Dedicated CHannel ») alloués à une connexion. De manière connue, le CRNC (respectivement SRNC) peut allouer plusieurs canaux DCHs à des connexions ayant un niveau élevé de QoS de transport (telles que notamment des connexions pour des services de voix), ou un seul canal DCH à des connexions pour d'autres types de services ayant un niveau plus faible de QoS de transport. Par exemple, pour la parole utilisant le codage AMR (« Adoptive Multi-Rate »), trois canaux de transport différents sont généralement utilisés : un pour des bits dits de classe A, un pour des bits dits de classe B et un pour des bits dits de classe C, où ces trois classes de bits correspondent à des niveaux d'importance différents des bits. On peut aussi se référer par exemple à la spécification 3GPP TS 34.108. Le CRNC (respectivement SRNC) peut alors signaler ce nombre de canaux dédiés au Node B (respectivement DRNC) notamment dans le message NBAP (respectivement RNSAP) « Radio Link Setup request».

Suivant un des aspects de l'invention, le Node B (respectivement DRNC) peut alors, notamment, attribuer un niveau élevé de QoS de transport à des connexions telles que des connexions pour des services de voix ayant trois canaux DCHs alloués, ou un niveau de QoS de transport plus faible à des connexions ayant un seul canal DCH alloué. En d'autres termes, un paramètre tel que le nombre de canaux dédiés alloués à une connexion peut également être considéré comme un paramètre représentatif de QoS de transport, dans la mesure où il peut être associé à un niveau de QoS de transport ou à au moins un paramètre de RAB pouvant être utilisé comme paramètre de QoS de transport.

Selon un autre exemple, le SRNC peut :
- attribuer la classe de trafic « conversationnelle» et allouer trois canaux DCHs à des connexions pour des services de voix,
- attribuer la classe de trafic « conversationnelle » et allouer un seul canal DCH à des connexions pour d'autres types de services de classe «conversationnelle » (par exemple des services de vidéo-téléphonie),
- attribuer d'autres classes de trafic à d'autres connexions,
et signaler ces paramètres, notamment au DRNC, notamment dons un message « Radio Link Setup request ». Le DRNC peut alors attribuer un niveau élevé de QoS de transport à des connexions de classe « conversationnelle » et ayant trois canaux DCHs alloués, et un niveau plus faible de QoS de transport à d'autres connexions.

De manière commune à ces différents modes de réalisation, à chaque fois que le CRNC (respectivement SRNC) établit un lien radio associé à un type de service ayant des contraintes élevées de délai et/ou de priorité, il signale au Node 8 (respectivement DRNC), au moyen du protocole NBAP (respectivement RNSAP), que la connexion de transport asssociée à ce lien radio particulier a. un haut niveau de QoS de transport (notamment des contraintes élevées de délai et/ou de priorité). Inversement, à chaque fois que le CRNC (respectivement SRNC) établit un lien radio associé à un type de service ayant un niveau plus faible de QoS de transport (notamment des contraintes plus faibles de délai et/ou de priorité), il signale ou Node B (respectivement DRNC) au moyen du protocole NBAP (respectivement RNSAP) que la connexion de transport asssociée à ce lien radio particulier a un niveau plus faible de QoS de transport (notamment des contraintes de délai et/ou de priorité plus faibles).

Au moyen de cette information, le Node B (respectivement DRNC) est alors capable de mettre en oeuvre des mécanismes de gestion de QoS de transport, dons le sens montant sur l'interface lub (respectivement dans les sens montant sur l'interface lur et/ou descendant sur l'interface lub), de manière à satisfaire les contraintes de QoS de transport indiquées par le CRNC (respectivement SRNC), notamment des contraintes de délai et/ou de priorité- Ceci permet notamment de satisfaire les contraintes de délai pour des services de voix.

La présente invention a également pour objet un élément de réseau (tel que notamment CRNC, SRNC, DRNC, Node B) comportant des moyens pour mettre en oeuvre un procédé suivant l'invention.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour la gestion de la qualité de service dans un réseau de radiocommunications mobiles dans lequel les protocoles de communication sur les interfaces terrestres comportent une couche réseau radio et une couche réseau de transport, et dans lequel la gestion de la qualité de service comporte une gestion de qualité de service liée à la couche réseau radio et une gestion de qualité de service liée à la couche réseau de transport, ledit procédé étant **caractérisé par** :
- une étape selon laquelle un élément de réseau dit premier élément de réseau signale à un autre élément de réseau dit deuxième élément de réseau, au moyen de protocole de signalisation de la couche réseau radio, ou moins un paramètre représentatif de QoS de transport, ou qualité de service pour la couche réseau de transport,
- une étape selon laquelle le deuxième élément de réseau utilise ledit au moins un paramètre, pour la gestion de QoS de transport.

2. Procédé selon la revendication 1, dons lequel ledit premier élément de réseau est un CRNC, Controlling Radio Network Controller.

3. Procédé selon la revendication 2, dans lequel ledit deuxième élément de réseau est un Node B, ou station de base.

4. Procédé selon l'une des revendications 2 ou 3, dans lequel ledit protocole de signalisation de la couche réseau radio est un protocole de signalisation, NBAP, applicable à l'interface entre CRNC et Node B.

5. Procédé selon les revendications 2 à 4, dans lequel ledit deuxième élément de réseau utilise ledit au moins un paramètre pour la gestion de QoS de transport, pour la transmission dans le sens montant sur l'interface entre CRNC et Node B.

6. Procédé selon la revendication 1, dans lequel ledit premier élément de réseau est un SRNC, Serving Radio Network Controller.

7. Procédé selon la revendication 6, dans lequel ledit deuxième élément de réseau est un DRNC, Drift Radio Network Controller

8. Procédé selon l'une des revendications 6 ou 7, dans lequel ledit protocole de signalisation de la couche réseau radio est un protocole de signalisation, RNSAP, applicable à l'interface entre SRNC et DRNC.

9. Procédé selon l'une des revendications 6 à 8, dans lequel ledit deuxième élément de réseau utilise ledit au moins un paramètre pour la gestion de QoS de transport, pour la transmission dans le sens montant, sur l'interface entre SRNC et DRNC, et/ou dons le sens descendant, sur l'interface lub entre DRNC et Node B.

10. Procédé selon l'une des revendications 1 à 9, dans lequel ledit ou moins un paramètre représentatif de QoS de transport correspond à un paramètre spécifique destiné à indiquer un niveau de QoS de transport.

11. Procédé selon l'une des revendications 1 à 9, dans lequel ledit au moins un paramètre représentatif de QoS de transport correspond à au moins un paramètre de RAB, Radio Access Bearer, pouvant également être utilisé comme paramètre de QoS de transport.

12. Procédé selon la revendication 11, dans lequel ledit au moins un paramètre de RAB pouvant également être utilisé comme paramètre de QoS de transport correspond au délai de transfert.

13. Procédé selon la revendication 11, dans lequel ledit au moins un paramètre de RAB pouvant également être utilisé comme paramètre de QoS de transport correspond à la priorité de traitement de trafic.

14. Procédé selon la revendication 11, dans lequel ledit au moins un paramètre de RAB pouvant également être utilisé comme paramètre de QoS de transport correspond à la classe de trafic.

15. Procédé selon l'une des revendications 11 à 14, dans lequel ledit ou moins un paramètre de RAB pouvant également être utilisé comme paramètre de QoS de transport est recopié ou traduit du protocole RANAP vers le protocole NBAP, respectivement du protocole RANAP vers le protocole RNSAP.

16. Procédé selon l'une des revendications 1 à 9, dons lequel ledit au moins un paramètre représentatif de QoS de transport correspond à au moins un paramètre pouvant être associé à un niveau de QoS de transport ou à au moins un paramètre de RAB, Radio Access Bearer, pouvant également être utilisé comme paramètre de QoS de transport.

17. Procédé selon la revendication 16, dans lequel ledit ou moins un paramètre pouvant être associé à un niveau de QoS de transport ou à au moins un paramètre de RAB pouvant également être utilisé comme paramètre de QoS de transport correspond à un paramètre d'ajustement temporel, des valeurs les plus faibles de ce paramètre étant attribuées à des connexions ayant des contraintes de délai de transfert et/ou de priorité de traitement de trafic les plus élevées, et des valeurs les plus élevées de ce paramètre étant attribuées à des connexions ayant des contraintes de délai de transfert et/ou de priorité de traitement de trafic les plus faibles.

18. Procédé selon la revendication 17, dans lequel ledit paramètre d'ajustement temporel est le paramètre TOAWS, « Time Of Arrivol Window Start ».

19. Procédé selon la revendication 16, dans lequel ledit au moins un paramètre pouvant être associé à un niveau de QoS de transport ou à au moins un paramètre de RAB pouvant également être utilisé comme paramètre de QoS de transport inclut au moins un paramètre représentatif de nombre de canaux dédiés alloués à une connexion, un nombre élévé de canaux dédiés étant alloué à des connexions ayant des contraintes de délai de transfert et/ou de priorité de traitement de trafic élevées, et un nombre moins élévé de canaux dédiés étant alloué à des connexions ayant des contraintes de délai de transfert et/ou de priorité de traitement de trafic moins élevées.

20. Element de réseau, comportant des moyens pour mettre en oeuvre un procédé selon l'une des revendications 1 à 19.

21. Contrôleur de réseau radio CRNC, comportant des moyens pour signaler à un Node B, au moyen d'un protocole de signalisation d'une couche réseau radio correspondant au protocole NBAP applicable à l'interface lub entre contrôleur de réseau radio CRNC et Node B, au moins un paramètre représentatif de la qualité de service pour la couche réseau de transport.

22. Contrôleur de réseau radio selon la revendication 21, comportant des moyens pour signaler ledit au moins un paramètre dans un message Radio Link Setup Request.

23. Contrôleur de réseau radio selon l'une des revendications 21 ou 22, dans lequel ledit au moins un paramètre correspond à un paramètre spécifique destiné à indiquer un niveau de QoS de transport.

24. Contrôleur de réseau radio SRNC, comportant des moyens pour signaler à un contrôleur de réseau radio DRNC, ou moyen d'un protocole de signalisation d'une couche réseau radio correspondant au protocole RNSAP applicable à l'interface lur entre contrôleur de réseau radio SRNC et contrôleur de réseau radio DRNC, au moins un paramètre représentatif de la qualité de service pour la couche réseau de transport.

25. Contrôleur de réseau radio selon la revendication 24, comportant des moyens pour signaler ledit au moins un paramètre dans un message Radio Link Setup Request.

26. Contrôleur de réseau radio selon l'une des revendications 24 ou 25, dans lequel ledit au moins un paramètre correspond à un paramètre spécifique destiné à indiquer un niveau de QoS de transport.

27. Contrôleur de réseau radio DRNC, comportant :
des moyens pour recevoir d'un contrôleur de réseau radio SRNC, au moyen d'un protocole de signalisation d'une couche réseau radio correspondant au protocole RNSAP applicable à l'interface lur entre contrôleur de réseau radio SRNC et contrôleur de réseau radio DRNC, au moins un paramètre représentatif de la qualité de service pour la couche réseau de transport,
des moyens pour utiliser ledit au moins un paramètre pour la gestion de la qualité de service de transport, pour la transmission dans le sens montant sur l'interface lur entre contrôleur de réseau radio SRNC et contrôleur de réseau radio DRNC et/ou dans le sens descendant sur l'interface lub entre contrôleur de réseau radio DRNC et Node B.

28. Contrôleur de réseau radio selon la revendication 27, comportant des moyens pour recevoir ledit au moins un paramètre dans un message Radio Link Setup Request.

29. Contrôleur de réseau radio selon l'une des revendications 27 ou 28, dans lequel ledit au moins un paramètre correspond à un paramètre spécifique destiné à indiquer un niveau de QoS de transport.

30. Node B, comportant :
des moyens pour recevoir d'un contrôleur de réseau radio CRNC, au moyen d'un protocole de signalisation d'une couche réseau radio correspondant au protocole NBAP applicable à l'interface lub entre contrôleur de réseau radio CRNC et Node B, au moins un paramètre représentatif de la qualité de service pour la couche réseau de transport,
des moyens pour utiliser ledit au moins un paramètre pour la gestion de la qualité de service de transport, pour la transmission dans le sens montant sur l'interface lub entre contrôleur de réseau radio CRNC et Node B.

31. Node B selon la revendication 30, comportant des moyens pour recevoir ledit au moins un paramètre dans un message Radio Link Setup Request.

32. Node B selon l'une des revendications 30 ou 31, dans lequel ledit au moins un paramètre correspond à un paramètre spécifique destiné à indiquer un niveau de QoS de transport.

## Claims

1. Method of managing quality of service in a mobile radio communication network in which the communication protocols over the terrestrial interfaces include a radio network layer and a transport network layer and in which quality of service management includes quality of service management linked to the radio network layer and quality of service management linked to the transport network layer, said method being **characterised by**:
- a step in which a network element called a first network element signals to another network element called a second network element, in accordance with the signalling protocol of the radio network layer, at least one parameter representing the quality of service for the transport network layer, also known as the transport QoS,
- a step in which the second network element uses said at least one parameter for transport QoS management.

2. Method according to claim 1, wherein said first network element is a controlling radio network controller (CRNC).

3. Method according to claim 2, wherein said second network element is a Node B or base station.

4. Method according to either claim 2 or claim 3, wherein said signalling protocol of the radio network layer is an NBAP signalling protocol applicable to the CRNC/Node B interface.

5. Method according to claims 2 to 4, wherein said second network element uses said at least one parameter for transport QoS management for transmission in the uplink direction over the CRNC/Node B interface.

6. Method according to claim 1, wherein said first network element is a serving radio network controller (SRNC).

7. Method according to claim 6, wherein said second network element is a drift radio network controller (DRNC).

8. Method according to either claim 6 or claim 7, wherein said signalling protocol of the radio network layer is an RNSAP signalling protocol applicable to the SRNC/DRNC interface.

9. Method according to any one of claims 6 to 8, wherein said second network element uses said at least one parameter for transport QoS management for transmission in the uplink direction over the SRNC/DRNC interface and/or in the downlink direction over the DRNC/Node B (lub) interface.

10. Method according to any one of claims 1 to 9, wherein said at least one parameter representing transport QoS corresponds to a specific parameter intended to indicate a transport QoS level.

11. Method according to any one of claims 1 to 9, wherein said at least one parameter representing transport QoS corresponds to at least one radio access bearer (RAB) parameter that can also be used as a transport QoS parameter.

12. Method according to claim 11, wherein said at least one RAB parameter that can also be used as a transport QoS parameter is the transfer delay.

13. Method according to claim 11, wherein said at least one RAB parameter that can also be used as a transport QoS parameter is the traffic handling priority.

14. Method according to claim 11, wherein said at least one RAB parameter that can also be used as a transport QoS parameter is the traffic class.

15. Method according to any one of claims 11 to 14, wherein said at least one RAB parameter that can also be used as a transport QoS parameter is copied or moved from the RANAP protocol to the NBAP protocol, respectively from the RANAP protocol to the RNSAP protocol.

16. Method according to any one of claims 1 to 9, wherein said at least one parameter representing transport QoS is at least one parameter that can be associated with a transport QoS level or at least one radio access bearer (RAB) parameter that can also be used as a transport QoS parameter.

17. Method according to claim 16, wherein said at least one parameter that can be associated with a transport QoS level or with at least one RAB parameter that can also be used as a transport QoS parameter is a time adjustment parameter, lower values of this parameter being assigned to connections having higher transfer delay and/or traffic handling priority constraints and the higher values of this parameter being assigned to connections having lower transfer delay and/or traffic handling priority constraints.

18. Method according to claim 17, wherein said time adjustment parameter is the time of arrival window start (TOAWS) parameter.

19. Method according to claim 16, wherein said at least one parameter that can be associated with a transport QoS level or with at least one RAB parameter that can also be used as a transport QoS parameter includes at least one parameter representing number of dedicated channels assigned to a connection, a high number of dedicated channels being assigned to connections having high transfer delay and/or traffic handling priority constraints and a lower number of dedicated channels being assigned to connections having lower transfer delay and/or traffic processing priority constraints.

20. Network element including means for implementing a method according to any one of claims 1 to 19.

21. Radio network controller CRNC including means for signalling to a Node B in accordance with a signalling protocol of a radio network layer corresponding to the NBAP protocol applicable to the lub interface between the radio network controller CRNC and Node B at least one parameter representing the quality of service for the transport network layer.

22. Radio network controller according to claim 21, including means for signalling said at least one parameter in a "Radio Link Set-up Request" message.

23. Radio network controller according to either claim 21 or claim 22, wherein said at least one parameter is a specific parameter intended to indicate a transport QoS level.

24. Radio network controller SRNC including means for signalling to a radio network controller DRNC in accordance with a signalling protocol of a radio network layer corresponding to the RNSAP applicable to the lur interface between radio network controller SRNC and radio network controller DRNC at least one parameter representing the quality of service for the transport network layer.

25. Radio network controller according to claim 24, including means for signalling said at least one parameter in a "Radio Link Set-up Request" message.

26. Radio network controller according to either claim 24 or claim 25, wherein said at least one parameter is a specific parameter intended to indicate a transport QoS level.

27. Radio network controller DRNC including:
means for receiving from a radio network controller SRNC in accordance with a signalling protocol of a radio network layer corresponding to the RNSAP protocol applicable to the lur interface between radio network controller SRNC and radio network controller DRNC at least one parameter representing the quality of service for the transport network layer,
means for using said at least one parameter for transport quality of service management for the transmission in the uplink direction over the lur interface between radio network controller SRNC and radio network controller DRNC and/or in the downlink direction over the lub interface between radio network controller DRNC and Node B.

28. Radio network controller according to claim 27, including means for receiving said at least one parameter in a "Radio Link Set-up Request message".

29. Radio network controller according to either claim 27 or claim 28, wherein said at least one parameter corresponds to a specific parameter intended to indicate a transport QoS level.

30. Node B including means for receiving from a radio network controller CRNC in accordance with a signalling protocol of a radio network layer corresponding to the NBAP protocol applicable to the lub interface between radio network controller CRNC and Node B at least one parameter representing the quality of service for the transport network layer,
means for using said at least one parameter for managing the transport quality of service for transmission in the uplink direction over the lub interface between the radio network controller CRNC and Node B.

31. Node B according to claim 30, including means for receiving said at least one parameter in a "Radio Link Set-up Request" message.

32. Node B according to either claim 30 or claim 31, wherein said at least one parameter corresponds to a specific parameter intended to indicate a transport QoS level.

## Patentansprüche

1. Verfahren zur Verwaltung der Dienstgüte in einem Mobilfunkkommunikationsnetz, in dem die Kommunikationsprotokolle auf den terrestrischen Schnittstellen eine Funknetzschicht und eine Transportnetzschicht umfassen und in dem die Verwaltung der Dienstgüte eine mit der Funknetzschicht verbundene Dienstgüte-Verwaltung und eine mit der Transportnetzschicht verbundene Dienstgüte-Verwaltung umfasst, wobei dieses Verfahren **gekennzeichnet ist durch**:
- einen Schritt, bei dem ein als erstes Netzelement bezeichnetes Netzelement einem als zweites Netzelement bezeichneten anderen Netzelement mittels eines Signalisierungsprotokolls der Funknetzschicht mindestens einen Parameter signalisiert, der für die Transport-QoS oder die Dienstgüte für die Transportnetzschicht repräsentativ ist;
- einen Schritt, bei dem das zweite Netzelement den mindestens einen Parameter für die Verwaltung der Transport-QoS nutzt.

2. Verfahren nach Anspruch 1, bei dem das erste Netzelement ein CRNC, Controlling Radio Network Controller, ist.

3. Verfahren nach Anspruch 2, bei dem das zweite Netzelement ein Node B oder eine Basisstation ist.

4. Verfahren nach einem der Ansprüche 2 oder 3, bei dem das Signalisierungsprotokoll der Funknetzschicht ein Signalisierungsprotokoll, NBAP, ist, das auf die Schnittstelle zwischen CRNC und Node B anwendbar ist.

5. Verfahren nach einem der Ansprüche 2 bis 4, bei dem das zweite Netzelement den mindestens einen Parameter für die Verwaltung der Transport-QoS für die Übertragung in Aufwärtsrichtung auf der Schnittstelle zwischen CRNC und Node B nutzt.

6. Verfahren nach Anspruch 1, bei dem das erste Netzelement ein SRNC, Serving Radio Network Controller, ist.

7. Verfahren nach Anspruch 6, bei dem das zweite Netzelement ein DRNC, Drift Radio Network Controller, ist.

8. Verfahren nach einem der Ansprüche 6 oder 7, bei dem das Signalisierungsprotokoll der Funknetzschicht ein Signalisierungsprotokoll, RNSAP, ist, das auf die Schnittstelle zwischen SRNC und DRNC anwendbar ist.

9. Verfahren nach einem der Ansprüche 6 bis 8, bei dem das zweite Netzelement den mindestens einen Parameter für die Verwaltung der Transport-QoS für die Übertragung in Aufwärtsrichtung auf der Schnittstelle zwischen SRNC und DRNC und/oder in Abwärtsrichtung auf der Schnittstelle zwischen DRNC und Node B nutzt.

10. Verfahren nach einem der Ansprüche 1 bis 9, bei dem der mindestens eine für die Transport-QoS repräsentative Parameter einem spezifischen Parameter entspricht, dessen Aufgabe es ist, ein Niveau der Transport-QoS anzugeben.

11. Verfahren nach einem der Ansprüche 1 bis 9, bei dem der mindestens eine für die Transport-QoS repräsentative Parameter mindestens einem Parameter RAB, Radio Access Bearer, entspricht, der ebenso als Parameter der Transport-QoS genutzt werden kann.

12. Verfahren nach Anspruch 11, bei dem der mindestens eine Parameter RAB, der ebenso als Parameter der Transport-QoS genutzt werden kann, der Übertragungsverzögerung entspricht.

13. Verfahren nach Anspruch 11, bei dem der mindestens eine Parameter RAB, der ebenso als Parameter der Transport-QoS genutzt werden kann, der Prioritätsverarbeitung des Verkehrs entspricht.

14. Verfahren nach Anspruch 11, bei dem der mindestens eine Parameter RAB, der ebenso als Parameter der Transport-QoS genutzt werden kann, der Verkehrsklasse entspricht.

15. Verfahren nach einem der Ansprüche 11 bis 14, bei dem der mindestens eine Parameter RAB, der ebenso als Parameter der Transport-QoS genutzt werden kann, vom RANAP-Protokoll in das NBAP-Protokoll kopiert oder übersetzt wird, beziehungsweise vom RANAP-Protokoll in das RNSAP-Protokoll.

16. Verfahren nach einem der Anspräche 1 bis 9, bei dem der mindestens eine für die Transport-QoS repräsentative Parameter mindestens einem Parameter entspricht, der einem Niveau der Transport-QoS oder mindestens einem Parameter RAB, Radio Access Bearer, zugeordnet werden kann, der ebenso als Parameter der Transport-QoS genutzt werden kann.

17. Verfahren nach Anspruch 16, bei dem der mindestens eine Parameter, der einem Niveau der Transport-QoS oder mindestens einem Parameter RAB zugeordnet werden kann, welcher ebenso als Parameter der Transport-QoS genutzt werden kann, einem Parameter für die zeitliche Einstellung entspricht, wobei die kleinsten Werte dieses Parameters Verbindungen zugewiesen werden, welche die höchsten Anforderungen an die Übertragungsverzögerung und/oder die Prioritätsbehandlung des Verkehrs aufweisen, und wobei die höchsten Werte dieses Parameters Verbindungen zugewiesen werden, welche die geringsten Anforderungen an die Übertragungsverzögerung und/oder die Prioritätsbehandlung des Verkehrs aufweisen.

18. Verfahren nach Anspruch 17, bei dem der Parameter für die zeitliche Einstellung der Parameter TOAWS, Time of Arrival Window Start, ist.

19. Verfahren nach Anspruch 16, bei dem der mindestens eine Parameter, der einem Niveau der Transport-QoS oder mindestens einem Parameter RAB zugeordnet werden kann, welcher ebenso als Parameter der Transport-QoS genutzt werden kann, einem Parameter entspricht, der für die Anzahl der dedizierten Kanäle repräsentativ ist, die einer Verbindung zugeteilt werden, wobei eine hohe Anzahl von dedizierten Kanälen für Verbindungen zugeteilt wird, welche hohe Anforderungen an die Übertragungsverzögerung und/oder die Prioritätsverarbeitung des Verkehrs aufweisen, und wobei eine weniger hohe Anzahl von dedizierten Kanälen Verbindungen zugeteilt werden, die weniger hohe Anforderungen an die Übertragungsverzögerung und/oder die Prioritätsverarbeitung des Verkehrs aufweisen.

20. Netzelement, umfassend Mittel zur Implementierung eines Verfahrens nach einem der Ansprüche 1 bis 19.

21. Funknetz-Controller CRNC, umfassend Mittel, um einem Node B mit Hilfe eines Signalisierungsprotokolls einer Funknetzschicht, das dem auf die Schnittstelle lub zwischen dem Funknetz-Controller CRNC und dem Node B anwendbaren NBAP-Protokoll entspricht, mindestens einen Parameter zu signalisieren, der für die Dienstgüte für die Transportnetzschicht repräsentativ ist.

22. Funknetz-Controller nach Anspruch 21, umfassend Mittel, um den mindestens einen Parameter in einer Nachricht Radio Link Setup Request zu signalisieren.

23. Funknetz-Controller nach einem der Ansprüche 21 oder 22, bei dem der mindestens eine Parameter einem spezifischen Parameter entspricht, dessen Aufgabe es ist, ein Niveau der Transport-QoS anzugeben.

24. Funknetz-Controller SRNC, umfassend Mittel, um einem Funknetz-Controller DRNC mit Hilfe eines Signalisierungsprotokolls einer Funknetzschicht, das dem auf die Schnittstelle lur zwischen Funknetz-Controller SRNC und Funknetz-Controller DRNC anwendbaren RNSAP-Protokoll entspricht, mindestens einen Parameter zu signalisieren, der für die Dienstgüte für die Transportnetzschicht repräsentativ ist.

25. Funknetz-Controller nach Anspruch 24, umfassend Mittel, um den mindestens einen Parameter in einer Nachricht Radio Link Setup Request zu signalisieren.

26. Funknetz-Controller nach einem der Ansprüche 24 oder 25, bei dem der mindestens eine Parameter einem spezifischen Parameter entspricht, dessen Aufgabe es ist, ein Niveau der Transport-QoS anzugeben.

27. Funknetz-Controller DRNC, umfassend:
- Mittel, um von einem Funknetz-Controller SRNC mit Hilfe eines Signalisierungsprotokolls einer Funknetzschicht, das dem auf die Schnittstelle lur zwischen Funknetz-Controller SRNC und Funknetz-Controller DRNC anwendbaren RNSAP-Protokoll entspricht, mindestens einen Parameter zu empfangen, der für die Dienstgüte für die Transportnetzschicht repräsentativ ist;
- Mittel, um den mindestens einen Parameter zur Verwaltung der Transport-Dienstgüte für die Übertragung in Aufwärtsrichtung auf der Schnittstelle lur zwischen Funknetz-Controller SRNC und Funknetz-Controller DRNC zu nutzen.

28. Funknetz-Controller nach Anspruch 27, umfassend Mittel, um den mindestens einen Parameter in einer Nachricht Radio Link Setup Request zu empfangen.

29. Funknetz-Controller nach einem der Ansprüche 27 oder 28, bei dem der mindestens eine Parameter einem spezifischen Parameter entspricht, dessen Aufgabe es ist, ein Niveau der Transport-QoS anzugeben.

30. Node B, umfassend
- Mittel, um von einem Funknetz-Controller CRNC mit Hilfe eines Signalisierungsprotokolls einer Funknetzschicht, das dem auf die Schnittstelle lub zwischen Funknetz-Controller CRNC und Node B anwendbaren NBAP-Protokoll entspricht, mindestens einen Parameter zu empfangen, der für die Dienstgüte für die Transportnetzschicht repräsentativ ist;
- Mittel, um den mindestens einen Parameter zur Verwaltung der Transport-Dienstgüte für die Übertragung in Aufwärtsrichtung auf der Schnittstelle lub zwischen Funknetz-Controller CRNC und Node B zu nutzen.

31. Node B nach Anspruch 30, umfassend Mittel, um den mindestens einen Parameter in einer Nachricht Radio Link Setup Request zu empfangen.

32. Node B nach einem der Ansprüche 30 oder 31, bei dem der mindestens eine Parameter einem spezifischen Parameter entspricht, dessen Aufgabe es ist, ein Niveau der Transport-QoS anzugeben.
